# FASCICULE DE BREVET EUROPEEN

(11) **EP 0 877 186 B1**
(45) Date de publication et mention de la délivrance du brevet: **23.04.2003**
(21) Numéro de dépôt: 98470010.4
(22) Date de dépôt: 04.05.1998
(51) Int. Cl.: F16L 1/10, F16L 21/08

(54) **Dispositif de raccordement d'éléments de tuyauterie**
Vorrichtung zum Verbinden von Rohrstücken
Device for connecting pipe elements

(30) Priorité: 05.05.1997 FR 9705514
(43) Date de publication de la demande: 11.11.1998
(73) Titulaire: SAINT-GOBAIN PAM, 54000 Nancy (FR)
(72) Inventeur: Gertsch, Bruno, 54000 Nancy (FR); Demoisson, Jacques, 54700 Loisy (FR); Lescot, Didier, 54200 Toul (FR); Bourgin, René, 54700 Montauville (FR)
(74) Mandataire: Puit, Thierry

(56) Documents cités:
- CH-A- 307 083
- DE-B- 1 074 336
- GB-A- 2 012 385

## Description

La présente invention concerne un dispositif de raccordement d'éléments de tuyauterie respectivement à bout uni et à emboîture, l'emboîture contenant une garniture d'étanchéité à compression radiale, du type comprenant :
- un premier organe d'appui destiné à être rendu solidaire du premier élément de tuyauterie et comportant au moins une manivelle de manoeuvre,
- un second organe d'appui destiné à être rendu solidaire du second élément de tuyauterie, et
- au moins une bielle adaptée d'une part pour coopérer avec l'extrémité de la manivelle, et d'autre part pour pivoter sur le second organe d'appui autour d'un axe, notamment par coopération d'un orifice ménagé dans la bielle avec un tourillon réalisé à la périphérie extérieure dudit second organe d'appui.

De manière habituelle, de tels éléments de tuyauterie sont raccordés par introduction de l'extrémité cylindrique lisse, ou bout uni, du premier élément, dans l'emboîture correspondante du second élément, laquelle emboîture contient une garniture interne d'étanchéité qui se trouve comprimée radialement entre les deux éléments lorsque le raccordement est réalisé.

Il est connu d'utiliser, pour une telle opération, un dispositif annexe de raccordement comprenant deux organes d'appui solidaires respectivement de chacun des éléments. Un tel dispositif est décrit, par exemple, dans le document GB-A-2 012 385.

Dans un dispositif connu, commercialisé par la société allemande HALBERGERHÜTTE, le premier organe d'appui est un organe de serrage constitué par un collier articulé, fixé sur la périphérie extérieure du bout uni. Cet organe de serrage présente deux portées cylindriques diamétralement opposées, faisant saillie radialement vers l'extérieur du bout uni. Sur ces portées peuvent pivoter des organes de manoeuvre correspondants qui sont constitués chacun d'un écrou hexagonal sur lequel est rapporté un maneton. Les axes respectifs de ce maneton et de l'écrou hexagonal sont parallèles mais distincts, de sorte que l'organe de manoeuvre, lors de son pivotement autour de la portée cylindrique, forme une manivelle.

Le second organe d'appui est constitué d'un demi-collier rapporté sur l'emboîture, et prolongé par une chaîne s'étendant sur le restant de la périphérie de l'emboîture, de manière à fixer en place l'organe d'appui. Ce dernier est en outre pourvu de deux tourillons diamétralement opposés, faisant saillie radialement vers l'extérieur de l'emboîture.

Le dispositif de raccordement est complété par deux bielles dont chacune d'une part coopère avec le maneton d'une manivelle, et d'autre part est montée pivotante sur un tourillon dont est pourvu le second organe d'appui.

Un opérateur, voire deux opérateurs dans le cas d'une compression maximale de la garniture d'étanchéité, font alors pivoter les deux écrous hexagonaux de l'organe de serrage du bout uni. Sous l'effet de la traction des bielles, l'emboîture est ainsi rapprochée du bout mâle uni fixe, jusqu'à ce que ce dernier vienne en contact d'une butée axiale de fond d'emboîture. Les deux éléments sont alors raccordés et compriment radialement la garniture d'étanchéité.

Toutefois, ce dispositif de raccordement n'est pas adapté à tous les types de garnitures d'étanchéité, et ne convient en particulier pas à des garnitures composites qui comprennent des éléments d'ancrage permettant de verrouiller le raccordement des éléments de tuyauterie.

En effet, l'alignement relatif des deux éléments de tuyauterie avant raccordement, est uniquement assuré par les opérateurs, sans l'aide d'appareils de mesure ou de visée annexe. De la sorte, il peut exister une déviation entre les axes des deux éléments, pouvant aller jusqu'à des valeurs de 6 à 8 degrés. Lors de la phase initiale de montage, le bout uni n'est donc pas introduit selon l'axe longitudinal de l'emboîture, de sorte qu'il sollicite la garniture d'étanchéité de manière inégale. Ceci peut conduire à une détérioration, voire à un déchirement de cette garniture, en particulier lors d'une déviation entre les axes supérieure à 3 degrés.

Afin de pallier ces inconvénients, l'invention vise la réalisation d'un dispositif de raccordement d'éléments de tuyauterie présentant une structure simple et permettant un positionnement correct lors de la phase initiale de montage, ainsi qu'un guidage relatif satisfaisant des deux éléments durant le montage, de sorte que la déviation entre les axes longitudinaux des deux éléments soit la plus faible possible durant l'ensemble de l'opération.

A cet effet, l'invention a pour objet un dispositif de raccordement comprenant les caractéristiques de la revendication 1.

L'invention permet de réaliser les objectifs précédemment mentionnés. En effet, l'existence des moyens de butée de l'organe d'appui, solidaire de l'emboîture, et de la bielle, empêche l'élément de tuyauterie pourvu de l'emboîture de basculer sous l'effet du moment exercé par son propre poids. De la sorte, la déviation entre les axes longitudinaux des deux éléments peut être limitée durant leur emboîtage.

Le dispositif suivant l'invention peut comporter une ou plusieurs des caractéristiques suivantes :
- les moyens de butée, en service, limitent dans au moins un sens l'inclinaison de la bielle par rapport à l'axe dudit second élément de tuyauterie à une valeur au plus égale à la déviation maximale admissible entre les deux éléments de tuyauterie lors de leur emboîtement mutuel ;
- les moyens de butée limitent ladite inclinaison à une valeur inférieure à 5° et de préférence au plus égale à 3° ;
- les moyens de butée limitent dans les deux sens le pivotement de la bielle par rapport au second organe d'appui ;
- les moyens de butée comprennent une ouverture ménagée dans la bielle et qui reçoit avec jeu un ergot réalisé à la périphérie extérieure du second organe d'appui et décalé par rapport à l'axe de pivotement de la bielle sur cet organe ;
- le second organe d'appui présente un tourillon diamétral pour le pivotement de la bielle, l'ergot possédant un axe longitudinal parallèle à celui du tourillon et situé à peu près à l'aplomb de celui-ci ;
- l'ouverture de la bielle est décalée vers l'extrémité de la bielle adjacente à la manivelle par rapport à un orifice de pivotement de la bielle ;
- la manivelle de manoeuvre comprend des saillies coopérant avec une butée réalisée sur la périphérie extérieure du premier organe d'appui pour limiter la rotation de la manivelle, notamment à 180° ;
- la manivelle de manoeuvre est munie d'un écrou polygonal d'actionnement sur lequel est fixé un maneton dont l'axe longitudinal passe par un sommet dudit écrou ;
- le second organe d'appui comprend un corps d'appui circulaire qui s'étend sur un secteur angulaire supérieur à 180° ;
- ledit corps d'appui est relié à un secteur complémentaire s'étendant sur le restant de la périphérie externe de l'embolture ;
- le profil interne du corps d'appui, et éventuellement celui dudit secteur complémentaire, est conjugué du profil externe, comportant un épaulement, de l'emboîture ;
- le dispositif comprend un anneau adaptateur de profil interne conjugué du profil externe de l'emboîture et destiné à être interposé entre cette emboîture et le second organe d'appui ;
- le profil externe de l'anneau adaptateur est conjugué du profil interne dudit second organe d'appui ;
- la bielle est pourvue à son extrémité adjacente à la manivelle d'au moins une encoche constituée par une fente sensiblement transversale qui est prolongée par un évidement circulaire décalé par rapport à ladite fente en direction de ladite extrémité de la bielle ;
- la bielle comporte deux encoches.

L'invention va être décrite ci-dessous, en référence aux dessins annexés donnés uniquement à titre d'exemples, et dans lesquels :
- la figure 1 est une vue axiale, partiellement en coupe, d'éléments de tuyauterie destinés à être raccordés,
- la figure 2 est une vue frontale d'un premier organe d'appui destiné à être fixé sur le premier élément de tuyauterie,
- les figures 3A et 3B sont des vues respectivement de face et de côté d'un organe de manoeuvre destiné à coopérer avec l'organe d'appui représenté à la figure 2,
- la figure 4 est une vue frontale d'un second organe d'appui destiné à être fixé sur le second élément de tuyauterie,
- la figure 5 est une vue frontale d'une bielle destinée à coopérer avec les deux organes d'appui,
- la figure 6 est une vue représentant le montage de la bielle sur l'organe d'appui de la figure 4, vue suivant la flèche VI de la figure 4,
- les figures 7A à 7C sont des vues en coupe axiale représentant les phases successives du raccordement des deux éléments de tuyauterie,
- la figure 8 est une vue en coupe axiale montrant un anneau d'adaptation du second organe d'appui sur une variante de l'emboîture d'un des éléments.

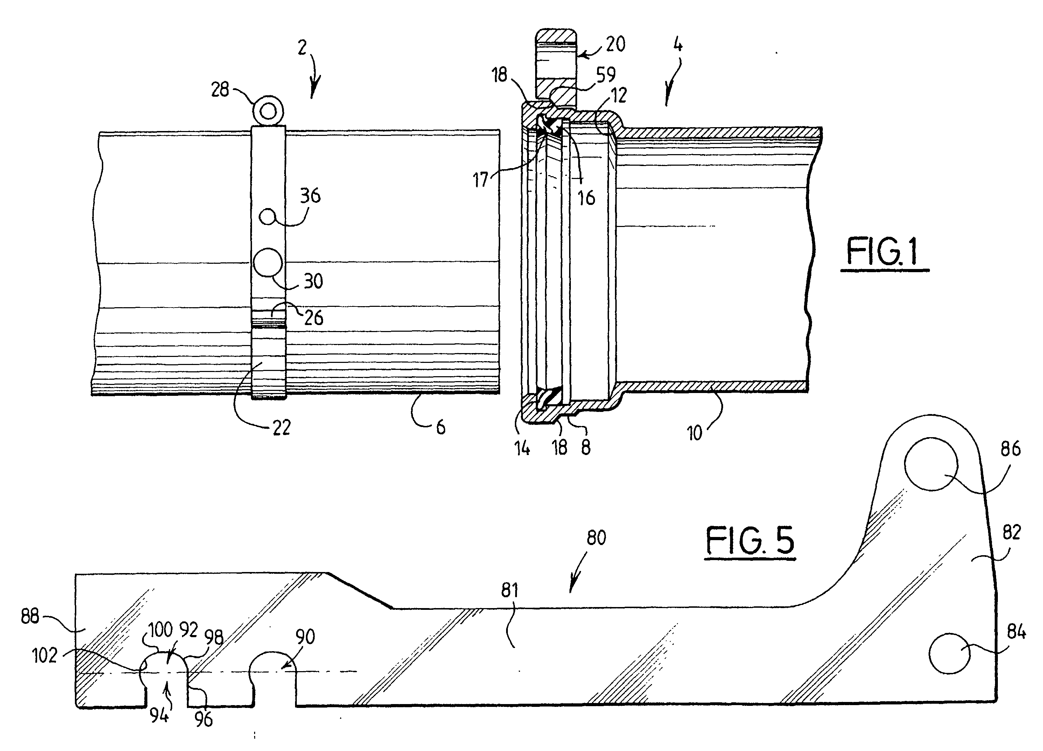

Comme l'indique la figure 1, l'invention a trait au raccordement d'un premier élément 2 de tuyauterie dans un second élément 4 de tuyauterie.

Le raccordement des deux éléments est assuré par l'introduction de l'extrémité cylindrique lisse 6, encore appelée bout uni, de l'élément 2, dans l'emboîture 8 correspondante de l'élément 4.

Cette emboîture 8 présente un diamètre supérieur à celui du fût 10 de l'élément 4, et présente une butée axiale 12 de fond d'emboîture contre laquelle s'appuie le bout uni 6 à la fin de l'opération de raccordement.

L'emboîture présente en outre une gorge intérieure 14 dans laquelle est logée une garniture d'étanchéité annulaire 16. Cette garniture, par exemple telle que celle décrite dans le FR-A-2 679 622 et commercialisée par la société PONT-A-MOUSSON sous la dénomination Standard Vi, présente des inserts d'ancrage métalliques 17, permettant de verrouiller l'assemblage des deux éléments lorsque ceux-ci ont été raccordés.

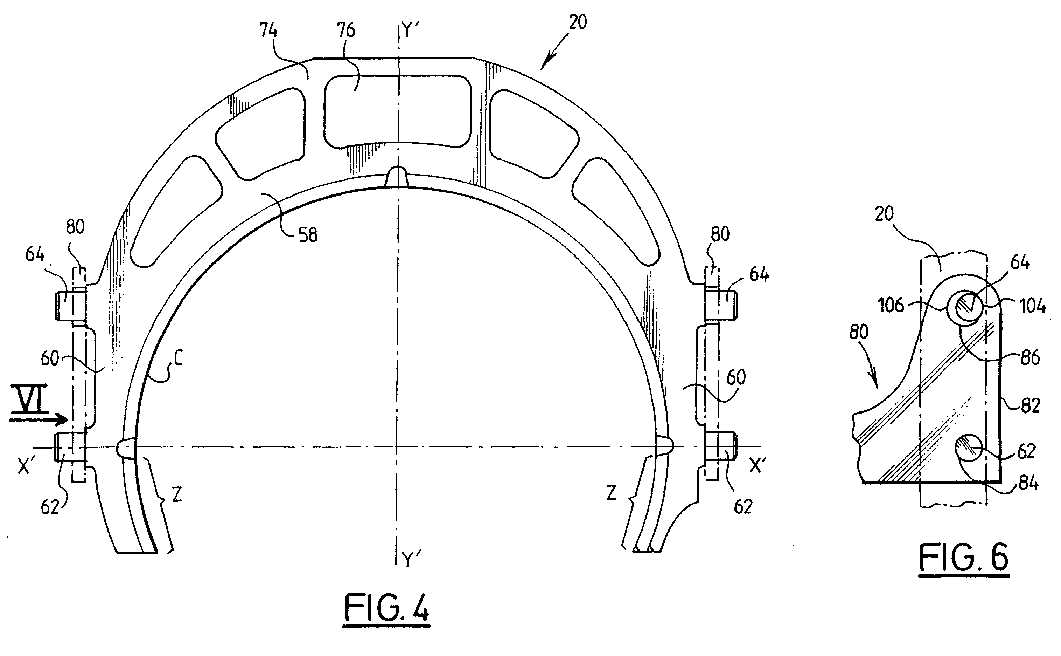

L'emboîture 8 présente en outre, extérieurement, un épaulement annulaire 18 au voisinage duquel est positionné un organe d'appui 20 représenté schématiquement, qui sera explicité en regard de la figure 4.

De manière analogue, un organe d'appui 22 est fixé sur la périphérie de l'élément 2, à distance de l'extrémité de son bout uni 6.

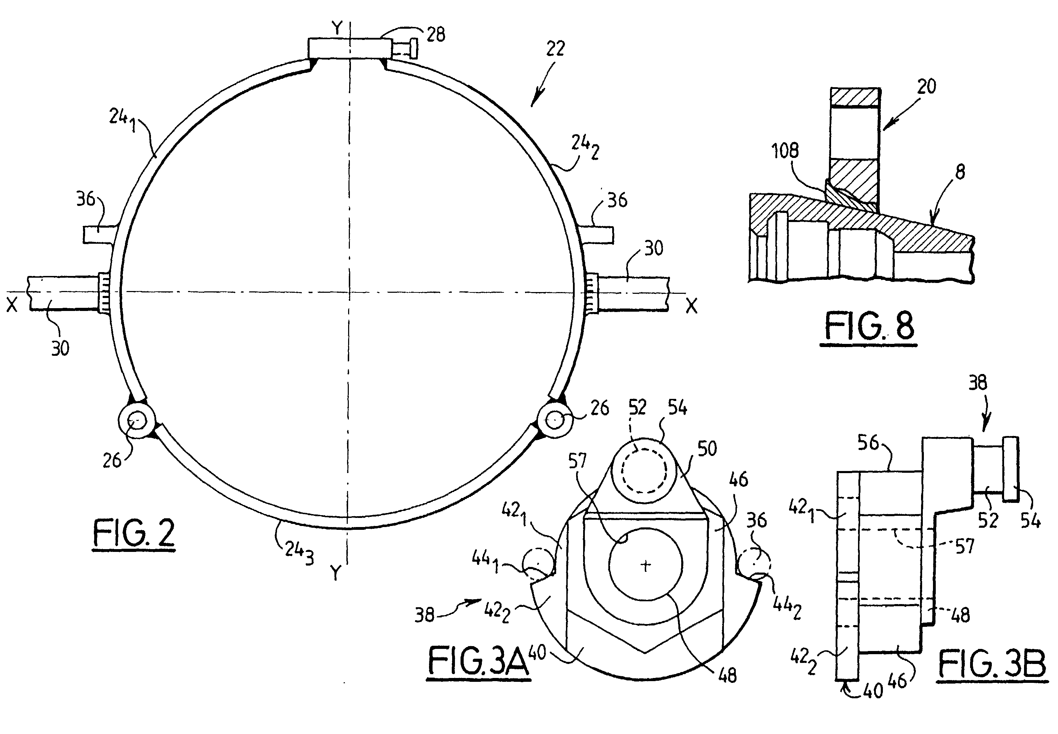

Comme le montre la figure 2, l'organe d'appui 22 est un organe de serrage qui se compose de trois parties 24 susceptibles de pivoter relativement autour d'articulations 26, de manière à pouvoir entourer la périphérie de l'élément 2. Les portions 24₁, 24₂ non reliées entre elles au moyen d'une articulation, peuvent être reliées mutuellement par l'intermédiaire d'un vérin à vis 28, de sorte que l'ensemble de l'organe de serrage puisse être rendu solidaire de l'élément 2.

L'organe de serrage 22 comprend deux portées 30 cylindriques diamétralement opposées, faisant saillie radialement vers l'extérieur. Des tétons 36 faisant saillie vers l'extérieur sont en outre réalisés à distance des portées cylindriques. Ces tétons sont symétriques par rapport à l'axe YY perpendiculaire à l'axe diamétral XX reliant les portées 30.

Les figures 3A et 3B représentent un organe de manoeuvre 38 destiné à tourillonner sur les portées 30 de l'organe de serrage.

Cet organe de manoeuvre 38 comprend une embase 40 qui se compose sensiblement de deux portions 42 semi-circulaires de même centre et de diamètres différents, reliées par deux épaulements obliques 44, formant surfaces de butée. La course angulaire de l'organe de manoeuvre est ainsi limitée à un demi-tour. L'organe 38 présente en effet deux positions extrêmes de rotation, définies par la butée des épaulements 44 contre le téton 36, comme illustré en traits mixtes sur la figure 3A (en positions relatives).

Sur cette embase est fixé un écrou hexagonal 46 coaxial aux deux demi-cercles constitutifs de l'embase 40. Un élément excentrique 48 est rapporté sur cet écrou, et porte un maneton 52 muni, à son extrémité libre, d'un rebord 54 cylindrique de diamètre supérieur à celui du maneton. L'axe longitudinal de ce maneton passe par le sommet 56 de l'écrou hexagonal 46.

L'embase 40, l'écrou hexagonal 46 et l'élément excentrique 48 présentent en outre un trou traversant 57 destiné au passage de la portée cylindrique 30.

Cet organe de manoeuvre 38 est donc susceptible de pivoter autour de la portée 30, par actionnement de l'écrou hexagonal au moyen d'un outil approprié. Comme cela a été noté auparavant, ce pivotement est limité par les deux surfaces 44 de butée de l'embase.

On peut en outre prévoir des moyens non représentés, tels qu'un écrou, permettant de retenir l'organe de manoeuvre sur la portée 30 sans cependant entraver son pivotement.

La figure 4 représente l'organe d'appui 20 destiné à être rapporté sur l'élément 4. Cet organe 20 est un collier qui comprend un corps d'appui 58 dont le profil interne définit, en vue de face, une portion de cercle C s'étendant selon un secteur angulaire d'environ 240 degrés. Afin de monter ce corps 58, il s'agit tout d'abord de l'enfiler sur le fût 10 de l'élément 4, de diamètre inférieur à celui de l'emboîture 8, puis de le déplacer axialement jusqu'à le positionner par épousement de formes sur la périphérie extérieure de l'emboîture.

A cet effet (figure 1), le profil longitudinal interne du corps 58 comprend un épaulement 59 conjugué de celui 18 réalisé sur le profil extérieur de l'emboîture 8, afin d'assurer une liaison mutuelle optimale.

Les zones Z qui s'étendent au-delà de l'axe X'X' diamétral horizontal du corps 58 constituent des butées permettant au corps de ne pas se désolidariser radialement de l'emboîture 8, lors du raccordement des deux éléments 2, 4.

La périphérie extérieure du corps 58 de l'organe de serrage 20 forme, au voisinage des zones de butée, deux méplats 60 symétriques par rapport à l'axe vertical Y'Y'. Deux tourillons diamétraux 62 sont réalisés sur chaque méplat 60, et font saillie radialement vers l'extérieur de l'organe de serrage 20.

Deux ergots supplémentaires 64 sont en outre prévus symétriquement par rapport à l'axe Y'Y'. Ces ergots supplémentaires sont réalisés à l'aplomb des tourillons diamétraux 62, et possèdent un axe longitudinal parallèle à celui de ces derniers.

La portion supérieure du corps 58 constitutif de l'organe de serrage 20 est constituée par une collerette 74 dans laquelle sont ménagées des encoches 76 de préhension.

Le corps 58 peut être, le cas échéant, relié à un secteur inférieur complémentaire de retenue non représenté, de même profil longitudinal intérieur, en particulier dans le cas d'éléments de tuyauterie de fort diamètre. Le corps et le secteur complémentaire peuvent être reliés par l'intermédiaire de tout moyen de fixation, comme par exemple des vérins à vis.

L'organe d'appui 20, qu'il soit constitué uniquement par le corps 58 ou complété par ledit secteur, permet de ne pas détériorer le revêtement de l'emboîture. Il convient donc notamment à des éléments de tuyauterie destinés à être utilisés dans des environnements corrosifs, contre lesquels ces éléments sont protégés par un revêtement extérieur en époxy ou polyéthylène.

La figure 5 représente une bielle 80 destinée à coopérer à la fois avec l'organe de manoeuvre 38 et avec un tourillon 62 et un ergot 64 dont est pourvu l'organe d'appui 20.

Cette bielle 80 présente une forme générale en L, avec une grande branche 81 horizontale et une petite branche 82 verticale, dirigée vers le haut. Un orifice inférieur 84 est prévu dans l'angle du L, et un orifice supérieur 86 de plus grand diamètre est prévu à l'extrémité de la branche 82. L'orifice 86 est à peu près à l'aplomb de l'orifice 84, mais est légèrement décalé par rapport à celui-ci vers la branche 81.

L'orifice inférieur 84 est destiné, comme le montre la figure 6, à s'emboîter sans jeu sur le tourillon diamétral 62 de l'organe 20. L'orifice supérieur 86 est pour sa part destiné à recevoir avec jeu l'ergot supplémentaire 64. De la sorte, il existe entre la bielle 80 et l'ergot 64 un degré limité de liberté en rotation.

A son autre extrémité 88, la bielle 80 est pourvue de deux encoches 90 et 92, destinées à coopérer successivement avec le maneton 52 de l'organe de manoeuvre 38.

Chaque encoche 90, 92 est constituée par une fente 94 verticale dont le bord 96 opposé à l'extrémité 88 de la bielle est prolongé par une portion 98 tangente en quart de cercle, suivie d'un méplat 100 horizontal. Ce dernier est prolongé par une portion de cercle définissant un évidement 102 situé, par rapport à la fente 94, en direction de l'extrémité 88 de la bielle. De la sorte, durant l'opération de raccordement décrite plus loin, le maneton 52 de l'organe de manoeuvre 38 a tendance à se loger dans l'évidement 102, de manière à éviter toute désolidarisation intempestive de la bielle par rapport à l'organe de manoeuvre.

On va maintenant décrire, en faisant référence à l'ensemble des figures 1 à 7C, le raccordement de deux éléments de tuyauterie au moyen du dispositif décrit ci-dessus. On suppose que l'élément 2 est fixe, car déjà raccordé à d'autres éléments de tuyauterie non représentés.

L'organe de serrage 22 est tout d'abord fixé autour de l'élément 2, à une distance prédéterminée de son extrémité. L'embase 40 de l'organe de manoeuvre 38 est en butée au niveau d'une de ses surfaces 44, de sorte que le maneton 52 de l'organe de manoeuvre 38 et la portée 30 cylindrique de l'organe de serrage 22 sont alignés suivant l'axe longitudinal de l'élément 2, le maneton étant disposé du côté du bout uni.

Puis on monte chaque bielle 80 sur le corps 58 de l'organe d'appui 20 destiné à être monté sur l'emboîture 8 de l'élément 4. A cet effet, on loge les tourillons 62 dans les orifices 84 et les ergots 64 dans les orifices 86. On dispose alors sur les tourillons diamétraux 62 des moyens de retenue non représentés, par exemple des écrous.

Le corps 58 de l'organe 20 est alors mis en place sur une partie de la périphérie externe de l'emboîture 8, par coopération de leurs épaulements 18, 59 respectifs. Dans le cas de tuyaux de fort diamètre, comme indiqué plus haut, un secteur complémentaire est fixé au corps, de sorte que l'organe d'appui ainsi formé s'étend sur toute la périphérie de l'emboîture.

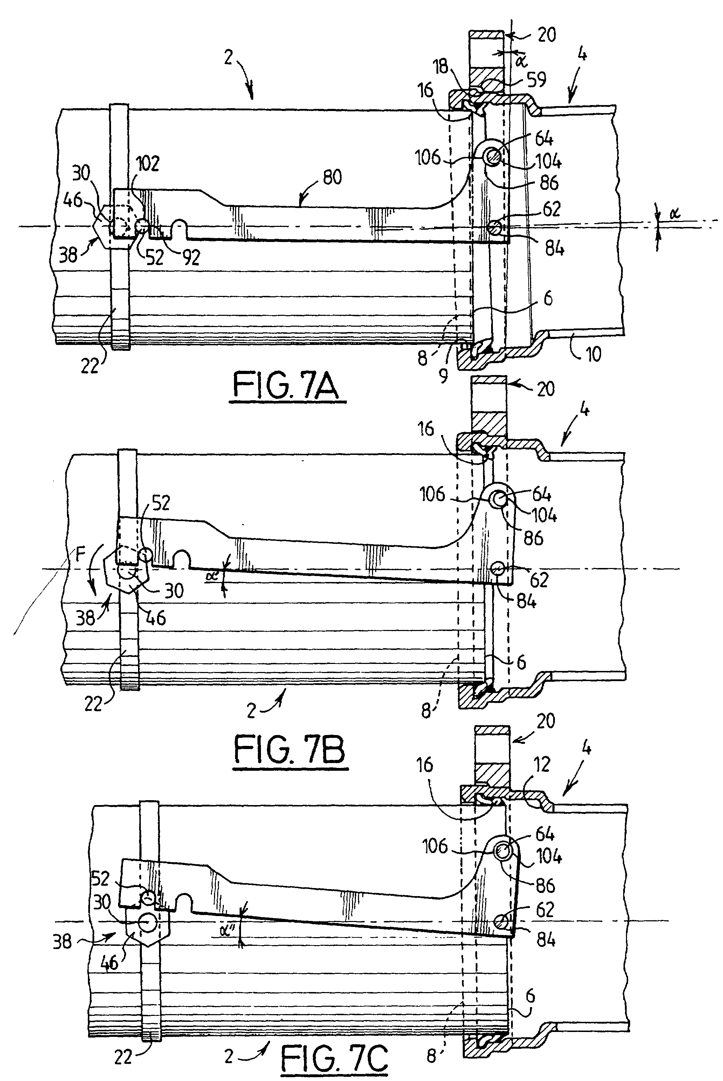

L'élément 4 est ensuite rapproché de l'élément 2 au moyen d'une grue, ou manuellement s'il est de faible dimension, de sorte que les manetons 52 viennent se loger dans les évidements 102 des encoches d'extrémité 92 des deux bielles 80, et que le bout uni 6 vienne se centrer dans la collerette d'entrée 9 de l'emboîture 8 (figure 7A).

Le positionnement initial de l'organe de serrage 22 sur l'élément 2 permet de satisfaire ces deux conditions.

Dans cette situation, la déviation existant entre les axes longitudinaux des éléments 2 et 4 est obligatoirement comprise entre deux valeurs extrêmes définies respectivement par les positions de butée des ergots 64 contre les surfaces latérales 104, 106 opposées des orifices supérieurs 86 des deux bielles.

La plage de déviation est donc parfaitement maîtrisée, et peut être modifiée, en fonction du jeu existant entre l'orifice supérieur 86 et l'ergot supplémentaire 64 ainsi que du positionnement relatif des ergots et des ouvertures. L'invention permet donc d'établir une position relative à peu près prédéterminée entre les deux éléments de tuyauterie, pendant la phase initiale de leur raccordement.

En l'espèce, sur la figure 7A, le fût 10 de l'élément 4 a été légèrement soulevé pour accrocher les bielles sur les deux manetons, et l'élément 4 a tendance à basculer sous l'effet de son propre poids. Ainsi, l'ergot supérieur 64 du collier 20 vient en butée contre la paroi verticale 104 de l'orifice 86 située du côté de l'élément 4. De la sorte, l'axe du fût 10 reste au-dessus de l'axe de l'élément 2, et il existe entre les axes des deux éléments un angle α égal, dans cet exemple, à 2°.

A la figure 7B, les opérateurs ont fait subir à l'écrou hexagonal une rotation d'environ 30 degrés dans le sens de la flèche F. La bielle s'incline donc vers le haut d'un angle α' par rapport à l'horizontale. qui en l'occurrence vaut 2°. De ce fait, l'orifice supérieur 86 de la bielle 80 pivote également du même angle α' autour de l'ouverture inférieure 84, en direction de l'élément 4.

Le moment induit par le poids de l'élément 4 fait basculer ce dernier, de sorte que l'ergot supérieur 64 du collier 20 reste en appui contre la même paroi 104 de l'orifice 86. L'élément 4 se trouve alors parfaitement aligné avec l'élément 2. Dans cette position, le bout uni a pénétré dans la garniture 16 à peu près jusqu'à mi-longueur de celle-ci.

A la figure 7C, l'écrou hexagonal 46 a fait un quart de tour par rapport à sa position initiale. La bielle 80 présente une déviation par rapport à l'horizontale selon un angle α" qui est supérieur à α', soit par exemple 4°. De manière analogue, l'orifice supérieur 86 de la bielle pivote selon un angle α" autour de l'ouverture inférieure 84, par rapport à sa position initiale.

Cependant, contrairement aux figures précédentes, l'ergot supplémentaire 64 de l'organe de serrage 20 n'est plus en butée contre la paroi 104. En effet, la garniture d'étanchéité 16 se trouve désormais en contact, sur toute sa surface interne, avec le bout uni 6 de l'élément 2. Cette garniture 16 assure donc le guidage de l'élément 4, et compense le moment induit par le poids de ce dernier. C'est donc désormais la garniture 16, et non plus la paroi 104 latérale de l'ouverture, qui empêche l'élément 4 de basculer vers le bas.

Dans la suite des opérations de montage, qui ne sont pas représentées, la garniture d'étanchéité continue à assumer la fonction de guidage, de sorte que l'élément 4 se déplace pratiquement en translation sans composante de basculement.

On conçoit que, dans ce cas, le jeu ménagé entre l'ergot supplémentaire 64 et l'orifice supérieur 86 de la bielle permet à ces deux éléments de se déplacer sans coincement. Ceci permet donc une adéquation entre leurs mouvements respectifs à savoir, lorsque la garniture 16 guide l'élément externe 4, sensiblement une translation dans le cas de l'ergot supplémentaire, et une translation avec une composante de rotation pour l'orifice de la bielle.

Il est à noter que, dans l'exemple représenté, les éléments 2 et 4 présentent une légère déviation relative à la phase initiale de leur montage (figure 7A). Ceci leur permet d'être pratiquement alignés, du fait du basculement de la bielle, aux phases suivantes (figures 7B et 7C) qui sont les plus critiques à l'égard de l'intégrité de la garniture d'étanchéité, et en particulier lorsque, vers la position de la figure 7B, la garniture commence à être fortement comprimée et à assurer la fonction de guidage de l'élément 4.

La phase suivante du montage (non représentée) consiste à amener l'embase 40 de l'organe de manoeuvre 38 en butée contre le téton 36, de sorte que l'écrou a fait un demi-tour. Puis, le maneton 52 est dégagé de l'encoche d'extrémité 92 de la bielle 80, l'écrou est tourné d'un demi-tour en sens inverse, et le maneton est logé dans l'autre encoche 90 de la bielle. Puis on fait à nouveau pivoter l'écrou 46 d'un demi-tour dans le sens F, de manière à amener l'élément 4 en appui contre la tranche d'extrémité de l'élément 2, au niveau de la butée 12 de fond d'emboîture.

La figure 8 illustre une variante dans laquelle la périphérie extérieure de l'emboîture 8 n'est plus pourvue d'un épaulement comme à la figure 1, mais présente un profil sensiblement conique. La liaison entre cet emboîture 8 et l'organe de serrage 20 est assurée par l'intermédiaire d'un anneau adaptateur 108, réalisé en un matériau analogue à celui de l'organe de serrage, et fixé sur ce dernier. Cet anneau présente un profil interne conique correspondant au profil externe de l'emboîture, et un profil extérieur conjugué du profil intérieur du corps 58.

Le dispositif de raccordement selon l'invention permet d'emboîter manuellement des éléments de tuyauterie dont le diamètre nominal peut atteindre 300 mm.

Il permet notamment de raccorder l'emboîture d'un tuyau ou d'un raccord, par exemple coudé, en T ou droit, sur le bout uni d'un tuyau.

Il permet également l'emboîtement d'éléments de canalisation de plus grande dimension, comme des tuyaux en fonte de plusieurs mètres de longueur.

## Revendications

1. Dispositif de raccordement d'éléments de tuyauterie (2, 4) respectivement à bout uni et à emboîture, l'emboîture (8) contenant une garniture d'étanchéité (16) à compression radiale, du type comprenant :
- un premier organe d'appui (22) destiné à être rendu solidaire du premier élément de tuyauterie (2) et comportant au moins une manivelle de manoeuvre (38),
- un second organe d'appui (20) destiné à être rendu solidaire du second élément de tuyauterie (4), et
- au moins une bielle (80) adaptée d'une part pour coopérer avec l'extrémité de la manivelle (38), et d'autre part pour pivoter sur le second organe d'appui (20) autour d'un axe, notamment par coopération d'un orifice (84) ménagé dans la bielle (80) avec un tourillon (62) réalisé à la périphérie extérieure dudit second organe d'appui (20),
**caractérisé en ce que** la bielle (80) et le second organe d'appui (20) comportent des moyens de butée associés (64, 86, 104, 106) qui limitent dans au moins un sens le pivotement de la bielle (80) par rapport audit second organe d'appui (20).

2. Dispositif selon la revendication 1, **caractérisé en ce que** les moyens de butée (64, 86, 104, 106), en service, limitent dans au moins un sens l'inclinaison de la bielle (80) par rapport à l'axe dudit second élément de tuyauterie (4) à une valeur au plus égale à la déviation maximale admissible entre les deux éléments de tuyauterie (2, 4) lors de leur emboîtement mutuel.

3. Dispositif selon la revendication 1 ou 2, **caractérisé en ce que** les moyens de butée (64, 86, 104, 106) limitent ladite inclinaison à une valeur inférieure à 5° et de préférence au plus égale à 3°.

4. Dispositif selon l'une des revendications 1 à 3, **caractérisé en ce que** les moyens de butée (64, 86, 104, 106) limitent dans les deux sens le pivotement de la bielle (80) par rapport au second organe d'appui (20).

5. Dispositif selon l'une des revendications 1 à 4, **caractérisé en ce que** les moyens de butée comprennent une ouverture (86) ménagée dans la bielle (80) et qui reçoit avec jeu un ergot (64) réalisé à la périphérie extérieure du second organe d'appui (20) et décalé par rapport à l'axe de pivotement (62) de la bielle sur cet organe.

6. Dispositif selon la revendication 5, **caractérisé en ce que** le second organe d'appui (20) présente un tourillon diamétral (62) pour le pivotement de la bielle (80), l'ergot (64) possédant un axe longitudinal parallèle à celui du tourillon et situé à peu près à l'aplomb de celui-ci.

7. Dispositif selon la revendication 6, **caractérisé en ce que** l'ouverture (86) de la bielle est décalée vers l'extrémité de la bielle (80) adjacente à la manivelle (38) par rapport à l'orifice (84) de pivotement de la bielle.

8. ,Dispositif selon l'une des revendications 1 à 7, **caractérisé en ce que** la manivelle de manoeuvre (38) comprend des saillies (44₁, 44₂) coopérant avec une butée (36) réalisée sur la périphérie extérieure du premier organe d'appui (22) pour limiter la rotation de la manivelle, notamment à 180°.

9. Dispositif selon l'une des revendications 1 à 8, **caractérisé en ce que** la manivelle de manoeuvre (38) est munie d'un écrou polygonal d'actionnement (46) sur lequel est fixé un maneton (52) dont l'axe longitudinal passe par un sommet (56) dudit écrou (46).

10. Dispositif selon l'une des revendications 1 à 9, **caractérisé en ce que** le second organe d'appui (20) comprend un corps d'appui circulaire (58) qui s'étend sur un secteur angulaire supérieur à 180°.

11. Dispositif selon la revendication 10, **caractérisé en ce que** ledit corps d'appui (58) est relié à un secteur complémentaire s'étendant sur le restant de la périphérie externe de l'emboîture (8).

12. Dispositif selon la revendication 10 ou 11, **caractérisé en ce que** le profil interne (59) du corps d'appui (58), et éventuellement celui dudit secteur complémentaire, est conjugué du profil externe, comportant un épaulement (18), de l'emboîture (8).

13. Dispositif selon l'une des revendications 1 à 12, **caractérisé en ce qu'**il comprend un anneau adaptateur (108) de profil interne conjugué du profil externe de l'emboîture(8) et destiné à être interposé entre cette emboîture et le second organe d'appui (20).

14. Dispositif selon la revendication 13, **caractérisé en ce que** le profil externe de l'anneau adaptateur (108) est conjugué du profil interne dudit second organe d'appui (20).

15. Dispositif selon l'une des revendications 1 à 14, **caractérisé en ce que** la bielle (80) est pourvue à son extrémité (88) adjacente à la manivelle (38) d'au moins une encoche (90, 92) constituée par une fente (94) sensiblement transversale qui est prolongée par un évidement circulaire (102) décalé par rapport à ladite fente (94) en direction de ladite extrémité (88) de la bielle (80).

16. Dispositif selon l'une des revendications 1 à 15, **caractérisé en ce que** la bielle (80) comporte deux encoches (90, 92).

## Patentansprüche

1. Vorrichtung zum Anschluß von Rohrleitungselementen (2, 4), die je ein glattes Ende bzw. eine Einsteckverbindung aufweisen, wobei die Einsteckverbindung (8) eine Dichtung (16) mit radialer Komprimierung enthält, von der Art, die aufweist:
- ein erstes Auflageorgan (22), das dazu bestimmt ist, mit dem ersten Rohrleitungselement (2) fest verbunden zu werden, und das mindestens eine Betätigungskurbel (38) aufweist,
- ein zweites Auflageorgan (20), das dazu bestimmt ist, mit dem zweiten Rohrleitungselement (4) fest verbunden zu werden, und
- mindestens eine Kurbelstange (80), die einerseits geeignet ist, um mit dem Ende der Betätigungskurbel (38) zusammenzuwirken, und andererseits, um auf dem zweiten Auflageorgan (20) um eine Achse zu schwenken, insbesondere durch Zusammenwirkung einer Öffnung (84) in der Kurbelstange (80) mit einem Drehzapfen (62), der am Außenumfang des zweiten Auflageorgans (20) ausgebildet ist,
**dadurch gekennzeichnet, daß** die Kurbelstange (80) und das zweite Auflageorgan (20) zugeordnete Anschlagmittel (64, 86, 104, 106) aufweisen, die in mindestens einer Richtung das Schwenken der Kurbelstange (80) in bezug auf das zweite Auflageorgan (20) begrenzen.

2. Vorrichtung nach Anspruch 1, **dadurch gekennzeichnet, daß** die Anschlagmittel (64, 86, 104, 106) im Betrieb in mindestens einer Richtung die Neigung der Kurbelstange (80) in bezug auf die Achse des zweiten Rohrleitungselements (4) auf einen Wert begrenzen, der höchstens gleich der maximal zulässigen Abweichung zwischen den beiden Rohrleitungselementen (2, 4) während ihres Ineinanderstekkens ist.

3. Vorrichtung nach Anspruch 1 oder 2, **dadurch gekennzeichnet, daß** die Anschlagmittel (64, 86, 104, 106) die Neigung auf einen Wert begrenzen, der unter 5° liegt und höchstens gleich 3° ist.

4. Vorrichtung nach einem der Ansprüche 1 bis 3, **dadurch gekennzeichnet, daß** die Anschlagmittel (64, 86, 104, 106) das Schwenken der Kurbelstange (80) in bezug auf das zweite Auflageorgan (20) in beiden Richtungen begrenzen.

5. Vorrichtung nach einem der Ansprüche 1 bis 4, **dadurch gekennzeichnet, daß** die Anschlagmittel eine Öffnung (86) aufweisen, die in der Kurbelstange (80) ausgebildet ist und die mit Spiel einen Zapfen (64) aufnimmt, der am Außenumfang des zweiten Auflageorgans (20) ausgebildet und in bezug auf die Schwenkachse (62) der Kurbel auf diesem Organ versetzt ist.

6. Vorrichtung nach Anspruch 5, **dadurch gekennzeichnet, daß** das zweite Auflageorgan (20) einen diametralen Drehzapfen (62) zum Schwenken der Kurbelstange (80) aufweist, wobei der Zapfen (64) eine Längsachse parallel zu derjenigen des Drehzapfens aufweist und in etwa lotrecht zu diesem angeordnet ist.

7. Vorrichtung nach Anspruch 6, **dadurch gekennzeichnet, daß** die Öffnung (86) der Kurbelstange zum der Kurbel (38) benachbarten Ende der Kurbelstange (80) in bezug auf die Schwenköffnung (84) der Kurbelstange versetzt ist.

8. Vorrichtung nach einem der Ansprüche 1 bis 7, **dadurch gekennzeichnet, daß** die Betätigungskurbel (38) Vorsprünge (44₁, 44₂) aufweist, die mit einem Anschlag (36) zusammenwirken, der auf dem Außenumfang des ersten Auflageorgans (22) ausgebildet ist, um die Drehung der Kurbel insbesondere auf 180° zu begrenzen.

9. Vorrichtung nach einem der Ansprüche 1 bis 8, **dadurch gekennzeichnet, daß** die Betätigungskurbel (38) mit einer polygonalen Betätigungsmutter (46) versehen ist, auf der ein Kurbelzapfen (52) befestigt ist, dessen Längsachse über einen Scheitel (56) der Mutter (46) verläuft.

10. Vorrichtung nach einem der Ansprüche 1 bis 9, **dadurch gekennzeichnet, daß** das zweite Auflageorgan (20) einen kreisförmigen Auflagekörper (58) aufweist, der sich über einen Winkelsektor von mehr als 180° erstreckt.

11. Vorrichtung nach Anspruch 10, **dadurch gekennzeichnet, daß** der Auflagekörper (58) mit einem komplementären Sektor verbunden ist, der sich über den Rest des Außenumfangs der Einsteckverbindung (8) erstreckt.

12. Vorrichtung nach Anspruch 10 oder 11, **dadurch gekennzeichnet, daß** das Innenprofil (59) des Auflagekörpers (58) und ggf. dasjenige des komplementären Sektors dem Außenprofil der Einsteckverbindung (8) angepaßt ist, das eine Schulter (18) aufweist.

13. Vorrichtung nach einem der Ansprüche 1 bis 12, **dadurch gekennzeichnet, daß** sie einen Anpaßring (108) aufweist, dessen Innenprofil dem Außenprofil der Einsteckverbindung (8) angepaßt ist und der dazu bestimmt ist, zwischen diese Einsteckverbindung und das zweite Auflageorgan (20) eingesetzt zu werden.

14. Vorrichtung nach Anspruch 13, **dadurch gekennzeichnet, daß** das Außenprofil des Anpaßrings (108) dem Innenprofil des zweiten Auflageorgans (20) angepaßt ist.

15. Vorrichtung nach einem der Ansprüche 1 bis 14, **dadurch gekennzeichnet, daß** die Kurbelstange (80) an ihrem der Kurbel (38) benachbarten Ende (88) mit mindestens einer Einkerbung (90, 92) versehen ist, die aus einem im wesentlichen quer verlaufenden Schlitz (94) besteht, der von einer kreisförmigen Vertiefung (102) verlängert wird, die in bezug auf den Schlitz (94) in Richtung des Endes (88) der Kurbelstange (80) verschoben ist.

16. Vorrichtung nach einem der Ansprüche 1 bis 15, **dadurch gekennzeichnet, daß** die Kurbelstange (80) zwei Einkerbungen (90, 92) aufweist.

## Claims

1. A device for coupling piping components (2, 4) having a plain end and socket respectively, the socket (8) including a radial-compression pressure seal (16), said device including:
- a first supporting member (22) designed to be secured to the first piping component (2) and comprising at least one control crank (38),
- a second supporting member (20) designed to be secured to the second piping component (4), and
- at least one connecting tie (80) suitable, on the one hand, for co-operating with the end of the crank (38) and, on the other hand, for pivoting on the second supporting member (20) about an axis, in particular by the co-operation of an aperture (84) provided in the connecting tie (80) and a pin (62) provided on the outer periphery of said second supporting member (20),
**characterised in that** the connecting tie (80) and the second supporting member (20) comprise associated means of abutment (64, 86, 104, 106) which limit, in at least one direction, the pivoting of the connecting tie (80) relative to said second supporting member (20).

2. A device according to claim 1, **characterised in that**, when the means of abutment (64, 86, 104, 106) are in operation, they limit, in at least one direction, the incline of the connecting tie (80) relative to the axis of said second piping component (4) to a value not exceeding the maximum admissible deviation between the two piping components (2, 4) when they are interlocked.

3. A device according to claim 1 or claim 2, **characterised in that** the means of abutment (64, 86, 104, 106) limit said incline to a value less than 5° and preferably not exceeding 3°.

4. A device according to any one of claims 1 to 3, **characterised in that** the means of abutment (64, 86, 104, 106) limit the pivoting of the connecting tie (80) relative to the second supporting member (20) in both directions.

5. A device according to any one of claims 1 to 4, **characterised in that** the means of abutment include an opening (86), which is provided in the connecting tie (80) and loosely receives a lug (64) provided on the outer periphery of the second supporting member (20) and offset from the pin (62), by means of which the connecting tie pivots on this member.

6. A device according to claim 5, **characterised in that** the second supporting member (20) has a diametral pin (62) to pivot the connecting tie (80), the lug (64) having a longitudinal axis parallel to that of the pin and disposed almost vertically above said pin.

7. A device according to claim 6, **characterised in that** the opening (86) of the connecting tie is offset towards the end of the connecting tie (80) adjacent the crank (38), relative to the aperture (84) by which the connecting tie is pivoted.

8. A device according to any one of claims 1 to 7, **characterised in that** the control crank (38) includes projections (44₁, 44₂), which co-operate with a stop (36) provided on the outer periphery of the first supporting member (22) to limit the rotation of the crank, in particular to 180°.

9. A device according to any one of claims 1 to 8, **characterised in that** the control crank (38) is provided with a polygonal actuating nut (46), to which is attached a crankpin (52) whose longitudinal axis passes through a top end (56) of said nut (46).

10. A device according to any one of claims 1 to 9, **characterised in that** the second supporting member (20) includes a circular supporting body (58) which extends over a section with an angle greater than 180°.

11. A device according to claim 10, **characterised in that** said supporting body (58) is connected to a further section extending over the remainder of the outer periphery of the socket (8).

12. A device according to claim 10 or claim 11, **characterised in that** the inner profile (59) of the supporting body (58), and optionally that of said further section, mates with the outer profile, comprising a shoulder (18), of the socket (8).

13. A device according to any one of claims 1 to 12, **characterised in that** it includes an adapter ring (108) whose inner profile mates with the outer profile of the socket (8) and which is intended to be inserted between this socket and the second supporting member (20).

14. A device according to claim 13, **characterised in that** the outer profile of the adapter ring (108) mates with the inner profile of said second supporting member (20).

15. A device according to any one of claims 1 to 14, **characterised in that** the connecting tie (80) is, at its end (88) adjacent the crank (38), provided with at least one slot (90, 92) formed by a substantially transversal elongated hole (94), which is extended by a circular recess (102) offset from said elongated hole (94) in the direction of said end (88) of the connecting tie (80).

16. A device according to any one of claims 1 to 15, **characterised in that** the connecting tie (80) has two slots (90, 92).
